# FASCICULE DE BREVET EUROPEEN

(11) **EP 0 305 312 B1**
(45) Date de publication et mention de la délivrance du brevet: **16.06.1993**
(21) Numéro de dépôt: 88480020.2
(22) Date de dépôt: 26.08.1988
(51) Int. Cl.: B60C 23/16, B60C 23/04

(54) **Dispositif monté sur une roue destiné à maintenir la pression dans un pneumatique, comprenant un réservoir d'air surcomprimé et un régulateur de pression qui déclenchera une alarme en cas de crevaison**
Eine auf ein Rad montierte, zur Aufrechterhaltung des Druckes in einem Reifen bestimmte, ein überkomprimiertes Luftreservoir und einen im Falle einer Reifenpanne einen Alarm erzeugenden Druckregler enthaltende Einrichtung
Device fitted on a wheel for maintaining the pressure in a tyre, comprising a compressed-air vessel and a pressure regulator triggering an alarm in case of rupture

(30) Priorité: 26.08.1987 FR 8712104
(43) Date de publication de la demande: 01.03.1989
(73) Titulaire: Duclos, Paul, F-77970 JOUY LE CHATEL (FR)
(72) Inventeur: Duclos, Paul, F-77970 JOUY LE CHATEL (FR)

(56) Documents cités:
- DE-A- 1 811 089
- DE-A- 2 918 481
- DE-B- 1 011 758
- FR-A- 1 439 522
- US-A- 2 609 857
- US-A- 2 693 841

## Description

La présente invention concerne un dispositif qui a pour objet de fournir automatiquement, véhicule roulant, la pression d'air comprimé optimum préconisée pour un pneumatique par le constructeur du véhicule, ainsi que de déclencher une alarme en cas de crevaison.

Le sous gonflage des pneumatiques, on le sait, a une influence certaine sur la tenue de route, la consommation de carburant et la longévité de ceux-ci. Ce qui nécéssite et c'est important, un contrôle fréquent de la pression. D'autant et c'est bien connu, que la pression diminue progressivement dans le temps par l'usage du véhicule, ou par une immobilisation prolongée. De plus, les crevaisons ont parfois des conséquences qui peuvent être dangereuses. A ce jour, les roues et leurs jantes demeurent toujours pour le même usage prévue depuis leurs conception d'origine, et cela malgré la technique déjà connue de certains dispositifs similaire a celui décrit dans le préambule de la revendication 1.

Ainsi on connait le Brevet Allemand DE-A-1811089, dont l'ensemble du dispositif (réservoir et régulateur) est situé à l'extérieur ou sur la partie habituellement visible de la roue; il est donc exposé aux risques d'agressions extérieure de toute nature pouvant altérer sa fiabilité (chocs violent, vandalisme). Le régulateur fonctionne comme une soupape limitant la pression ayant un débit d'air fixa et préréglé pour combler les pertes normales d'air; en cas de crevaison ce débit d'air reste limité, sans moyens supplémentaires pour l'augmenter automatiquement, afin de retarder efficacement un dégonflage plus ou moins rapide. L'alarme de ce dispositif est émise de l'extérieur par le régulateur lorsqu'il est traverse par l'air comprimé, produisant un signal acoustique ou sonore tel un sifflet. Le conducteur devra étre attentif pour entendre ce signal sonore de l'intérieur, en raison des inévitables et divers bruits environnants qui sont variables (régime moteur, auto-radio), et suivant la qualité de l'étanchéité sonore dans le véhicule.

Le but principal de la présente invention est de remédier à ces inconvénients tel que défini dans la revendication 1, et consiste à rajouter à l'intérieur des roues le dispositif suivant:
- Un réservoir d'air surcomprimé solidaire de la jante qui sera associé à un régulateur de pression animé par un piston particulier.

Destiné en premier lieu à maintenir la pression, ce régulateur provoquera de plus en cas de crevaison, le transfert instantané vers le pneumatique de l'air contenu dans le réservoir, et déclenchera un système d'alarme électronique qui indiquera au tableau de bord du véhicule laquelle des roues est crevée.

L'ensemble de ce dispositif permettra donc d'accroître la sécurité.
a) en supprimant les pertes de pression.
b) par le fait d'être averti pour réagir plus tôt en cas de crevaison.

D'autre part, d augmenter la longévité des pneumatiques et d'éviter une surconsommation de carburant. Enfin, de réduire la frequence et pallier à l'oubli des séances de gonflage.

Selon une caractéristique de l'invention, le réservoir d'air comprimé constitue l'élément de base dans le dispositif, associé à la jante, il lui donnera une fonction supplémentaire.
La capacité en air du réservoir sera variable en fonction du type de jante, et sera automatiquement plus importante que la jante est grande; donc le pneumatique. La pression d'air comprimé dans le réservoir devra étre au moins supérieure de 50% de la pression préconisée pour le pneumatique.
C'est un impératif technique pour que le dispositif fonctionne. Un détail qui a son importance est à souligner, c'est le réservoir que l'on remplira d'air comprimé et non plus le pneumatique comme auparavant; toutefois cette possibilité demeure.

L'emplacememt du réservoir étant important pour sa capacité, il a été retenu d'utiliser le volume disponible situé au niveau du flanc intérieur de la jante qui est symétrique à celui d'où émerge la valve du pneumatique. Il y aura deux possibilités de réalisation du réservoir,
1) il sera inclus dans la jante lors de sa fabrication.
2) ou sera constitué d'un tube rapporté et solidaire de la jante.

Selon d'autres caractéristiques de l'invention, le réservoir d'air comprimé est nécessairement associe à un régulateur de pression. Celui-ci sera l'élément essentiel dans le dispositif. En effet, il a un triple rôle ;
1) fournir au pneumatique l'air stocké dans le réservoir par une compensation automatique provoquée par la baisse de Pression existant dans le pneumatique; afin de maintenir une pression constant optimum.
2) En cas de crevaison, il la détectera et réagira comme un robinet grand ouvert, assurant un débit important et le transfert de l'air dans le pneumatique, de façon modulée sans dépasser la pression requise. Cet aspect technique étant précisement destinée à retarder le dégonflage total du pneumatique, jusqu'à épuisement de la réserve d'air.
3) par association technique avec un système à contact électrique, il déclenchera une alarme electronique produisant un signal sonore et lumineux.
   Le régulateur communiquera avec le réservoir par un tube rigide, et par un tube flexible avec le pneumatique.

L'emplacement de ce régulateur a été determiné en fonction de sa taille, de la place disponible et de la nécessité de le positionner au plus prés de la valve d'origine du pneumatique; afin d'éviter une trop grande longueur du tube flexible. Mais surtout d'accéder à la valve de remplissage du réservoir.

Le flanc d'une roue standard ou d'origine, présente vu de l' extérieur une partie circulaire renflée comportant plusieurs ouvertures, au bas de celles-ci vu de l'intérieur, apparait la partie incurvée correspondante; c'est à ce niveau que vient se loger le régulateur.

La description d'un mode de réalisation qui va suivre, ainsi que les dessins annexés sont donnes à titre d'exemple; mais permettront de mieux comprendre le fonctionnement du dispositif.

La figure 1 représente en coupe transversale, l'ensemble du dispositif objet de l'invention, dans la version du réservoir inclus dans la jante, (avec pour mémoire un dispositif de freins à disque et le moyeu de roue).

La figure 2 représente le même ensemble que la fig.1, mais dans la version du réservoir constitué par un tube métallique rapporté.

Les figures 3, 4 et 5 représentent en coupe axiale le régulateur de pression associé au système déclenchant l'alarme. Respectivement :

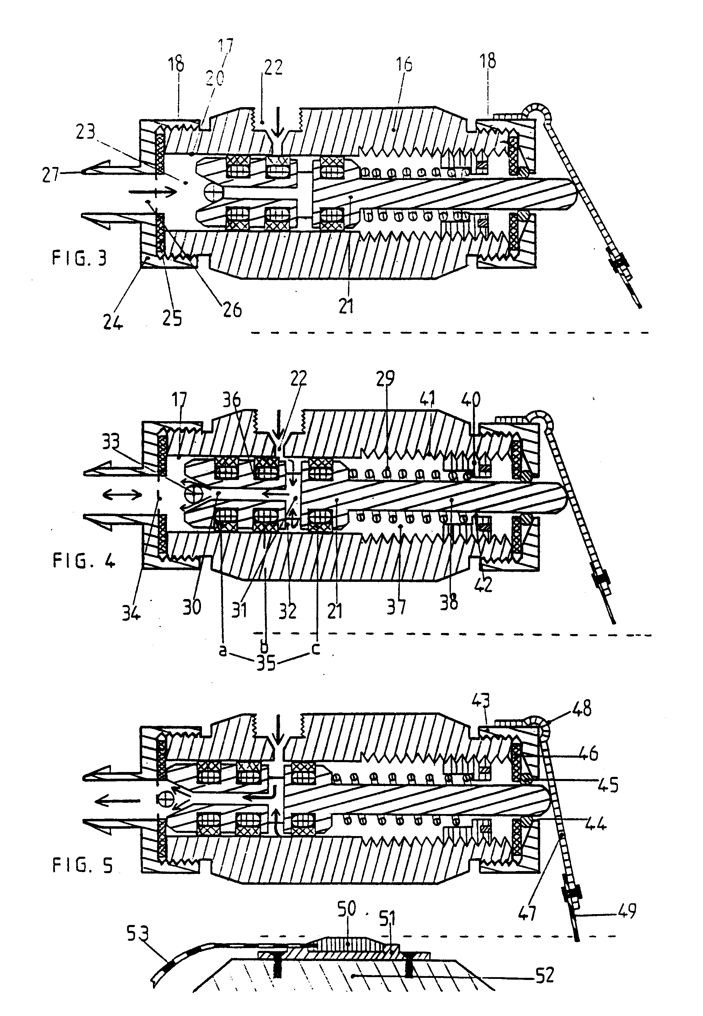

- figure 3, en position normale (ou fermée) par égalité des pressions agissant sur le piston, la pression étant optimum dans le pneumatique.
- figure 4, en position de compensation d'air, la pression requise étant moindre ou insuffisante.

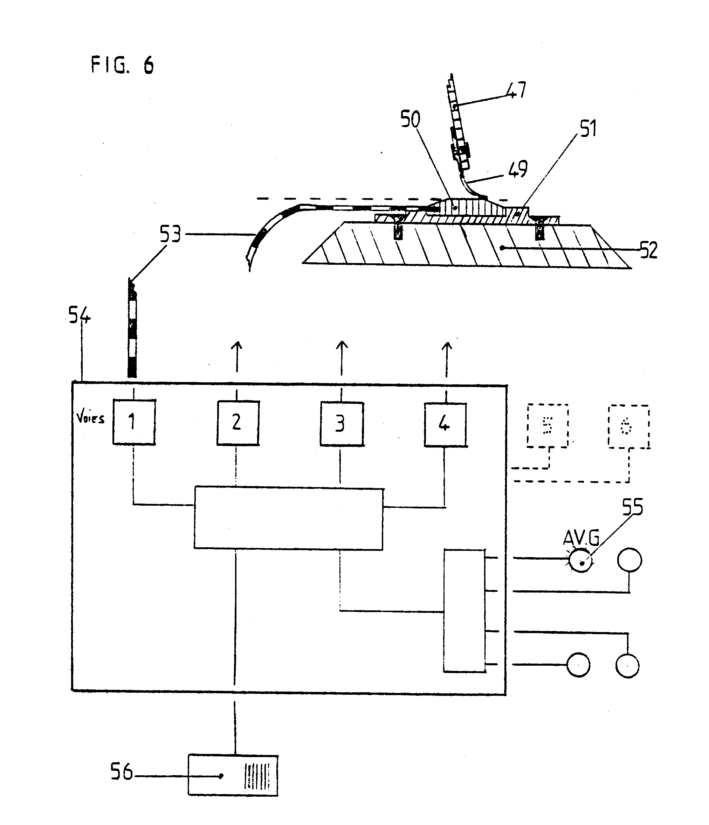

- figure 5, en position de transfert d'air et d'alarme, la pression étant très inférieure suite à une crevaison.

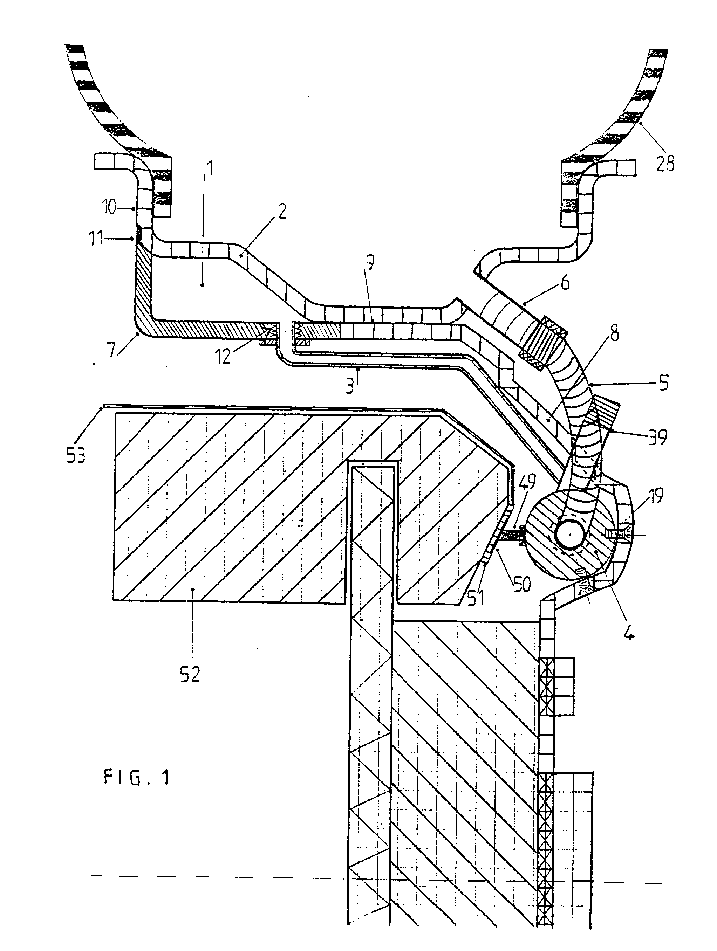

Selon un mode de réalisation préférentiel, la figure 1 représente le réservoir (1) inclus dans la jante (2) lors de sa fabrication. Pour cela, il a été retenu de modifier la structure de l'ensemble roue/jante en prolongeant la tôle (7) de la roue (8) à partir de son point de jonction (9) sur la jante (2) vers l'intérieur de celle-ci, puis de rejoindre par un angle à 90° et dans l'alignement le flanc intérieur (10) de ladite jante (2); à ce niveau, la 2ème jonction (11) roue/jante ce fera par soudure.

A l'issue de cette réalisation, on se trouvera en présence d'une cavité hermétique sur toute la circonférence de la jante, qui constituera le réservoir (1). Ainsi réalisé il comportera de plus un orifice fileté (12) permettant de le relier au régulateur (4) par un tube rigide (3).
Cette caractéristique de fabrication est applicable pour les roues standards produites en série, dont ce type équipe la majorité des véhicules en sortie d'usine. Pour les roues nouvelles génération, dont la jante est en alliage léger, et à structure différente, les caractéristiques de fabrication seront différentes, mais l'objet de la présente invention leur reste applicable.

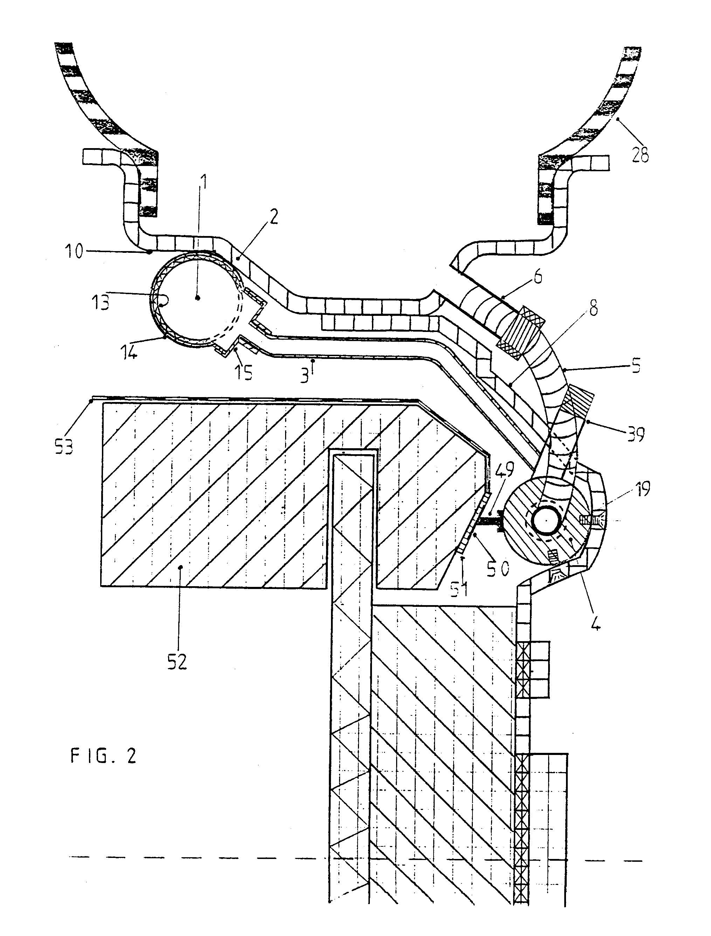

Selon une variante, la figure 2 représente le réservoir (1) qui pourra être réalisé avec un tube métallique (13) d'un diamètre et d'une longueur déterminé en fonction du type de jante. Après avoir cintré ce tube (13), on raccordera ensemble ses deux extrémités par l'intermédiaire d'un "T" (14). Au 3ème orifice de celui-ci sera placé un réducteur (15) permettant la liaison d'un tube rigide (3) de plus petit diamètre avec le régulateur (4), puis l'ensemble sera fixé solidairement sur le flanc intérieur (10) de la jante (2). Cette seconde version de réalisation du réservoir verra son application aux roues déjà en service sur les véhicules.

Selon d'autres caractéristiques de l'invention, qui sont représentées sur les figures 3, 4 et 5, le régulateur sera constitué d'un corps (16) de préférence cylindrique, choisi dans un métal rendu inaltérable à la corrosion, Dans celui-ci sera réalisé un cylindre (17) le traversant axialement. A chaque extrémité et à l'extérieur sera réalisé un filetage (18) destiné à recevoir un chapeau. Quatre trous filetés (19) situés latéralement (fig.1) sont prévus pour sa fixation sur la roue qui aura été percée à cet effet. Dans la première moitié, sera usiné un alésage (20) égal à la course du piston (21), puis un orifice radial (22) situé latéralement au cylindre qui commence par un filetage et fini en forme oblongue et conique; par lequel arrivera l'air issu du réservoir (1). Une partie du cylindre alésé sera la chambre de pression (23), celle-ci sera rendue étanche par un chapeau (24) comportant un filetage interne et son joint statique (25). Ce chapeau comportera en son centre une ouverture (26) munie d'un embout (27) solidaire.

Un piston (21) en alliage léger se déplacera axialement dans le cylindre (17) en fonction de deux poussées antagonistes appliquées à chaque extrémité dudit piston, l'une provoquée par la pression effective existant dans le pneumatique (28); l'autre engendrée par la compression d'un ressort (29) réglé à la pression requise. Dans le piston sera réalisé en son centre un orifice axial (30), débutant en forme conique du côté de la tête dudit piston, cet orifice aboutira à la partie médiane du piston pour communiquer avec un second orifice (31) le traversant dans le sens radial, pour communiquer avec l'orifice latéral du cylindre (22). Au niveau de l'orifice radial (31) sera réalisé une gorge (32) sur toute la circonférence du piston (21), permettant une communication plus facile avec les orifices (31) et (22) d'où provient l'air comprimé dont la pression au cours d'une compensation d'air poussera une bille (33) en matière synthétique qui sera flottante et destinée à obstruer l'orifice conique (30) dès que la pression est optimum, ce qui provoquera une étanchéité au niveau de la tête du piston (21).
De cette façon, celui-ci subira une poussée franche et antagoniste à celle engendrée par le ressort (29). Ce qui permettra également un déplacement du piston (21) plus conséquent avant la phase de compensation et une meilleure communication entre les orifices (31) et (22). Cette bille synthétique (33) devra être suffisamment rigide pour ne pas être introduite par la pression dans l'orifice axial (30) du piston.
Une grille (34) placée entre le chapeau (24) et son joint (25) pour éviter l'introduction de la bille dans le conduit flexible (5).

Trois joints de piston assurent une étanchéité dynamique du fait de la présence d'air comprimé.
- Le 1er joint (35-a), par rapport à la pression d'air existant dans la chambre de pression et l'orifice latéral (22), en cas de surpression.
- Le 2ème joint (35-b), par rapport à l'orifice latéral du cylindre (22) et l'orifice radial du piston (31).
- Le 3ème joint (35-c), par rapport aux deux orifices (22)-(31) et la cavité (37) qui est contigue au cylindre (17).
Ces joints seront logés dans trois gorges (36) usinées sur le piston.
L'air comprimé provenant du réservoir (1) sera canalisé par un tube rigide (3) dont une extrémité viendra s'emmancher hermétiquement sur la base d'une valve (39) qui se vissera sur l'orifice latéral (22) du régulateur. Cette valve émergera vers l'extérieur de la roue et permettra le remplissage du réservoir.
L'air comprimé destiné au pneumatique (28) sera canalisé par un conduit flexible (5) dont une extrémité sera reliée hermétiquement a l'embout (27) du chapeau de cylindre (24), l'autre extrémité au pneumatique (28).

Dans la seconde moitié du cylindre se présente donc une cavité (37) où le piston (21) sera poussé par un ressort (29) qui est guidé par la tige (38) dudit piston. Une vis creuse (40) permettra la compression du ressort (29) en fonction de la pression préconisée, cette vis qui sert de siège au ressort se déplacera sur un filetage (41) réalisé sur la paroi de la cavité (37).
Un orifice (42) traversant axialement la vis (40) sera réalisé pour permettre le déplacement de la tige de piston (38).

Un second chapeau (43) comportant un filetage interne sera fixé sur l'autre extrémité du régulateur. Au centre de ce chapeau sera réalise un orifice (44) pour permettre le passage de la tige (38) du piston. Un joint torique (45) et le joint statique (46) du chapeau (43) permettront d'assurer l'étanchéité. La tige (38) du piston assure par son extrémité émergeante qui aura été arrondie, le mouvement d'une lame rigide (47) qui sera fixée solidairement sur le chapeau (43).

Cette lame rigide (47) comporte une partie renflée (48) qui provoque un faible effet ressort poussant sur la tige du piston (38). Sur l'extrémité de cette lame rigide (47) est rivetée une lamelle souple (49) qui doit assurer un contact électrique avec une plaque (50) que doit étre immobile. Cette plaque (50) sera conductrice, elle sera fixée par une entretoise isolante (51) sur la partie du système de frein du véhicule qui est immobile. En l'occurence, sur l'étrier (52) pour les freins à disque (voir fig.1 et 5) et sur le plateau recepteur pour les freins à tambour, (non représenté).
La fixation de la plaque et de son entretoise devra être faite de marière à ce qu'elles se trouvent en façe de la lamelle souple (49) pour établir le contact électrique. Un conducteur unifilaire (53) sera connecté à la plaque conductrice (50) pour être branché à un système d'alarme.

Selon une autre caractéristique de l'invention, et suivant la figure 6, un système d'alarme electronique indiquera laquelle des roues est crevée.
Un signal électrique de polarité négative ou positive provenant de la plaque (50) suite au contact de la lamelle (49) sera transmis par un conducteur unifilaire (53) à une des voies d'une centrale électronique (54) qui en comporte autant qu'il y a de roue sur le véhicule. Cette voie transformera le signal électrique en une alarme visuelle lumineuse (55) indiquant laquelle des roues est crevée, et déclenchera une alarme sonore issue d'un circuit commun au, voies qui sera branché sur un buzzer (56).
Enfin, la durée de fonctionnement sera temporisée.

Cette alarme pourra éventuellement étre déclenchée par une centrale équipant déjà le véhicule, à condition qu'elle se déclenche par une polarité négative ou positive, Il suffira de relier ensemble les fils (53) provenant des plaques conductrices et de les connecter à la centrale d'origine. Mais on ne saura pas quelle est la roue qui est crevés.

## Revendications

1. Dispositif monté sur une roue destiné à maintenir la pression dans un pneumatique, comprenant un réservoir d'air surcomprimé et un régulateur de pression qui déclenchera une alarme en cas de crevaison;
caractérisé en ce que le réservoir (1) et le régulateur de pression (4) muni d'un piston (21) sont placés axialement à l'intérieur de la roue (8);
en ce qu'une pression d'air issue du pneumatique (28) présente dans la chambre de pression (23) et la pression antagoniste du ressort (29) agissant axialement sur le piston (21) déterminent son déplacement dans le cylindre (17) du régulateur (4); l'égalité de ces pressions assurant l'obstruction d'un orifice conique (30) du piston (21) par une bille flottante (33), puis l'obstruction d'un orifice latéral (22) par un joint (35b) du piston (21) fermant l'arrivée d'air surcomprimé issu du réservoir (1), le réglage d'une vis creuse (40) agissant sur la compression d'un ressort (29) fixe la pression utile dans le pneumatique (28);
en ce qu'une pression moindre dans la chambre de pression (23) engendre la poussée antagoniste du ressort (29) déplaçant le piston (21) avec son joint (35b) qui commande l'ouverture de l'orifice (22), libérant l'air surcomprimé issu du réservoir (1) qui s'introduira dans des orifices internes (31)-(30) du piston (21) et la chambre de pression (23) en délogeant la bille (33) située dans l'orifice conique (30) du piston (21), puis dans le pneumatique (28) en ce qu'une pression trés inférieure dans la chambre de pression (23) libère la pression antagoniste du ressort (29) exercée sur le piston (21) qui subira avec son joint (35b) un important déplacement assurant l'ouverture totale de l'orifice latéral (22) pour le transfert dans le pneumatique (28) de l'air surcomprimé qui est canalisé par les orifices internes(31)-(30) du piston (21) et simultanément l'égal déplacement d'une tige (38) solidaire du piston (21) assurant un contact électrique qui déclenchera une alarme électronique (54);
et en ce qu'une surpression dans la chambre de pression (23) est admise, le joint (35a) et la bille (33) du piston (21) assurant l'étanchéité par rapport à l'orifice latéral (22) du cylindre (17).

2. Dispositif avec un réservoir (1) situé à l'intérieur de la roue (8) selon la revendication 1 caractérisé en ce que le réservoir (1) est solidaire sur toute sa circonférence du flanc intérieur (10) de la jante (2), qu'il est constitué par une cavité hermétique réalisée avec une tôle (7) prolongeant la tôle (9) de la roue (8) jusqu'au point de jonction (11), qu'il pourra être relié au réguiateur (4) par un tube rigide (3) sur l'orifice fileté (12).

3. Dispositif avec un réservoir (1) situé a l'intérieur de la roue (8) selon la revendication 1 caractérise en ce que le réservoir (1) est constitué selon une variante par un tube (13) fixé solidairement sur toute la circonférence du flanc intérieur (10) de la jante (2).

4. Dispositif avec un régulateur (4) situé à l'intérieur de la roue (8) selon la revendication 1 caractérisé en ce que le régulateur (4) est constitué d'un corps (16) comportant axialement un cylindre (17) alésé (20) muni d'un orifice (22) situé latéralement pour l'arrivée d'air surcomprimé, d'un piston (21) s'y déplaçant axialement, d'un ressort (29) qui est comprimé par une vis creuse (40) se déplacant sur la paroi filetée (41) pour le réglage d'une pression antagoniste et munie d'un orifice axial (42) pour le passage d'une tige (38), d'une hille d'étanchéité (33) située dans l'orifice conique (30) du piston (21), d'une grille (34) empêchant l'expulsion de la hille (33), de deux chapeaux (24)-(43) avec deux joints statiques (25)-(46) qui pourront être vissés sur le filetage (18) de ses deux extrémités assurant l'étanchéité.

5. Piston utilisé dans le régulateur (4) selon les revendications 1 et 4 caractérisé en ce qu'il est constitué d'un corps possédant en son centre un orifice axial (30) débutant en forme conique aboutissant à second orifice (31) le traversant et d'une gorge (32) qui sont destinés à canaliser l'air surcomprimé, de trois gorges (36) pour trois joints (35a,b,c) assurant une étanchéité dynamiques dans le cylindre (17), d'une tige (38) solidaire le prolongeant munie de son joint (45) destinée à guider le ressort (29) et à provoquer un contact électrique déclenchant une alarme électronique (54).

6. Alarme électronique selon les revendications 1 et 5 caractérisée en ce qu'elle est déclenchée par le mouvement important de la tige (38) solidaire du piston (21) émergeant du régulateur (4) par l'orifice (44) du chapeau (43) assurant par son extrémité le mouvement d'une lame (47) et d'une lamelle (49) solidaires fixées sur le régulateur (4) établissant un contact électrique avec une plaque (50) isolée par une entretoise (51) fixée sur le système de frein (52), puis reliée par un fil conducteur (53) à une des voies d'une centrale électronique (54) qui en comporte autant qu'il y a de roue sur le véhicule, et produisant un signal sonore (56) et lumineux (55) précisant au tableau de bord du véhicule quelle est la roue qui a crevée.

## Claims

1. Device fitted on a wheel for maintaining the pressure in a tyre, comprising a compressed-air vessel and a pressure regulator triggering an alarm in case of rupture;
distinguished by the chamber (1) and the pressure-regulator (4) fitted with a valve (21) being placed axially inside the wheel (8) so that air pressure, supplied from the tyre, present in the pressure chamber (23) and the counter-pressure from a spring acting axially on the piston (21) determines its displacement in the cylinder (17) of the valve (4); equal pressures ensuring the obstruction of a conical orifice (30) of the piston (21) with a floating ball (33) then the obstruction of a lateral aperture (22) by the gasket (35b) of the piston (21) cutting off the supply of compressed air from the compressaid-air chamber (1), the ajusting of a hollow screw (40) compressing a spring (29) fixes the working-pressure in the tyre (28);
so that a lower pressure in the pressure-chamber (23) activates the counter-pressure of the spring (29) displacing the piston with its gasket (35b) which controls the opening of the aperture (22) releasing the compressed air from the chamber which is introduced trhough the internal apertures (31)-(30) of the piston (21) and the pressure chamber (23) by dislodging the ball (33) situated in the conical aperture (30) of the piston (21), then into the tyre (28) so that the much reduced pressure in the pressure chamber (23) releases the counter-pressure of the spring (29) against the piston (21) which along whith its gasket (35b) will be moved some way enabling the complete opening of the lateral aperture (22) enabling the transfer into the tyre (28) of the compressed air which is piped through the internal apertures (31)-(30) of the piston (21) and at the same time the steady movement of a lever/arm (38) an integral part of the piston (21) making an electrical contact which will set off an electronic alarm (54) and so that a high-pressure in the pressure chamber is permitted, the gasket and the ball (33) of the valve (21) maintaining air-tightness in relation to the lateral aperture (22) of the cylinder (17).

2. Device with reservoir (1) situated inside the wheel (8) according to submission 1 distinguished by the reservoir (1), being an integral part of the whole circumference of the interior side (10) of the rim (2) which is made up of with an air-tight cavity fitted with a plate (7) prolonging the wheel plate (8) up to the junction point (11), so that it can be attached to the regulator (4) by a rigid tube (3) onto the threaded aperture (12).

3. Device with a reservoir (1) situated inside the wheel (8) according to submission 1, distinguished in that the reservoir (1) is made in a different manner by a tube (13) fixed as an integral part around the circumference of the interior side of the rim (2).

4. Device with a pressure-regulator (4) situated on the interior of the wheel (8) according to submission 1 characterised by the regulator (4), being made up of a body (16) consisting of a cylinder (17) placed axially bored out (20) fitted with laterally placed aperture (22) to allow compressed air to enter, a piston (21) working axially, a spring (29) which is depressed by a hollow screw (40) which moves along the threade casing (41) in order to regulate the counter-pressure and fitted with an axial aperture (42) to allow the movement of a lever (38), and air-tight ball (33) situated in the conical apperture (30) of the piston (21), a grill to prevent the ball escaping (33), two lids (24)-(43) with two static gaskets (25)-(26) which could be screwed to the threading (18) of these two extremities ensuring air-tightness;

5. Piston used in the regulator (4) according to submissions 1 and 4, being made up of a body possessing in its centre an axial orifice (30) starting in a conical form and ending with a second orifice (31) which crosses it and a groove (32) which are designed to channel the compressed air, three grooves (36) for three gaskets (35a, 35b, 35c) assuring dynamic air-tightness in the cylinder (17), an integral arm extending it fitted with its gasket (45) designed to guide the spring (29) and to make an electrical contact setting off an electronic alarm (54).

6. An electronic alarm as in sumbmissions 1 and 5, being set off by a considerable movement of the piston (21) integral shank (38) emerging from the regulator (4) via an aperture (44) in the lid (43) making possible at its extremity the movement of a strip (47) and a thin strip (49) of metal fixed to the regulator (4) making an electrical contact with a plate (50) isolated by a cross-brace (51) fixed to the breaking system (52) then connected by conducting wire (53) to one of the imputs of an electronic controler (54) one for each wheel of the vehicule which produce an audio-signal (56) and a luminous signal (55) giving precise details on the vehicule's control panel as to which tyr has burst.

## Patentansprüche

1. Eine auf ein Rad montierte, zur Aufrechterhaltung des Druckes in einem Reifen bestimmte, ein Überkomprimiertes Luftreservoir und einem im Falle einer Reifenpanne einen Alarm erzeugenden Druckregler enthaltende Einrichtung; daß der Behälter (1) und der mit einem Kolben (21) versehene Druckregulator (4) innerhalb des Rads axial angesetzt sind
daß ein Druck der Luft aus dem Reifen (28) in der Druckkammer (23) und der Gegendruck der Feder (29) eine axiale Wirkung auf den Kolben (21) ausüben und seine Bewegung im Zylinder (17) des Regulators (4) bestimmen.
Der Druckausgleich gewährleistet die Sperrung einer konischen Offnung (30) des Kolbens (21) durch eine sich frei bewegende Kugel (33) sowie die Sperrung einer Seitenöffung (22) durch eine Dichtung (35b) des Kolbens (21), die das Eingringen von Überdruckluft aus dem Behälter (1) verhindert, während die Regelung einer Hohlschraube (40), die eine Wirkung auf die Spannung der Feder (29) ausübt, den erforderlichen Druck im Reifen bestimmt
daß ein Druckmangel in der Druckkammer (23) den Gegenschub der Feder (29) verursacht und so den Kolben (21) bewegt samt dessen Dichtung (35b), die das Aufmachen der Offnung (22) bestimmt, so daß die frei gewordene Druckluft aus dem Behälter (1) in die Innenöffnungen (31)-(30) des Kolbens (2) und in die Druckkammer (23) durch das Vertreiben der Kugel aus der konischen Offnung (30) des Kolbens (21) und zuletzt in den Reifen (28) kommt
daß ein sehr großer Druckmangel in der Druckkammer (23) den Gegendruck der Feder (29) auf den Kolben (21) auslöst, der sich folglich samt seiner Dictung (35b) bedeutend bewegt und somit das volle Aufmachen der Seitenöffnung (22) zum Übergang der Überdruckluft in den Reifen durch die Innenöffnungen (31)-(30) des Kolbens (21) verursacht und gleichzeitig das entsprechende Verschieben eines an dem Kolben (21) festgesetzten Stabs (38), der über einem elektrischen Kontakt einen elektronischen Alarm auslöst
daß ein Überdruck in der Druckkammer (23) möglich ist, da die Dichtung (35a) und die Kugel (33) des Kolbens (21) die Seitenöffnung (22) des Zylinders (17) dicht halten.

2. Vorrichtung mit einem Behälter (1) innerhalb des Rads angesetzt laut Anspruch 1 und dadurch gekennzeichnet,
daß der Behälter (1) auf dem ganzen Kreisumfang an der Innenseite (10) der Felge (2) festgesetzt ist und aus einem hermetischen Hohlkörper besteht, der aus einem Blech (7) hergestellt ist, das das Blech (9) des Rads bis zum Verbindungspunkt (11) verlängert
daß er mit dem Regulator (4) durch ein steifes Rohr (3) durch Anschluß an der mit Gewinde versehenen Offnung (12) verbunden sein kann.

3. Vorrichtung mit einem Behälter (1) innerhalb des Rads (8) angesetzt laut Anspruch 1 und dadurch gekennzeichnet,
daß der Behälter(1) in einer anderen Variante aus einem Rohr (13) besteht, das auf dem ganzen Kreisumfang der Innenseite (10) der Felge (2) festgesetzt ist.

4. Vorrichtung mit einem Regulator (4) innerhalb des Rads(8) laut Anspruch 1 und dadurch gekennzeichnet,
daß der Regulator (4) aus einem Gehäuse (16) besteht, in dem ein ausgebohrener (20) Zylinder (17) sich in der Achsenrichtung befindet, versehen
. mit einer Seitenöffnung (22) zum Eindringen von Überdruckluft
. mit einem sich in der Achsenrichtung bewegenden Kolben (21)
. mit einer Feder (29), durch eine Hohlschraube gespannt, die sich längs der mit Gewinde versehenen Wand (41) bewegt zur Regelung eines Gegendrucks und die eine axiale Offnung (42) besitzt zum Durchgehen eines Stabs (38)
. mit einer Abdichtungskugel (33) in der konischen Offnung (30) des Kolbens (21)
. mit einem Gitter (34), das das Austreiben der Kugel (33) verhindert
. mit zwei Deckein (24)-(43) mit je einer dichtung (25)-(46), die sich dank einem Gewinde an den beiden Enden schrauben lassen und so die Abdichtung gewährleisten.

5. Kolben in dem Regulator (4) ausgenutzt laut Ansprüchen 1 und 4 und dadurch gekennzeichnet, daß er
. aus einem Körper besteht mit -in der Mitte- einer konisch beginnenden Axialöffnung (30) bis zu einer zweiten querliegenden Offnung (31) und die gemeinsam mit einer Auskehlung (32) die Überdruckluft leiten sollen
. aus drei Auskehlungen (36) für drei Dichtungen (35a,b,c,), die eine dynamische Abdichtung im Zylinder (17) gewährleisten
. aus einem mit eigener Dichtung (45) festgesetzten Stab (38) der den Kolben (21) verlängert und die Feder (29) leitet aber auch mittels eines elektrischen Kontakts einen elektronischen Alarm (54) auslösen soll.

6. Elektronischen Alarm laut Ansprüchen 1 und 5 und dadurch gekennzeichnet, daß sie von der bedeutenden Bewegung des an dem Kolben (21) festgesetzten Stabs (38) ausgelöst wird, wenn dieser aus dem Regulator (4) durch die Offnung (44) des Deckels (43) herauskommt und so mit seiner Spitze ein Blättchen (47) und eine Lamelle (49) in Bewegung bringt, die an dem Regulator (4) festgesetzt sind und so einem elektrischen Kontakt verursachen mit einer Platte (50)
. isoliert durch ein an der Bremsanlage festgesetztes Abstandsstück (51)
. verbunden über einen Leitfaden (53) mit einer der Leitungen einer elektronischen Zentrale (54), die soviele besitzt wie die Zahl der Räder eines Fahrzeuges und die ein Hör (56) und Lichtsignal (55) am Armaturenbrett gibt, was zeigt, an welchem Rad Plattfuß ist.
